(19)

Europäisches
Patentamt
European
Patent Office
Office européen
des brevets

(11) **EP 3 493 578 B1**

(12) **EUROPEAN PATENT SPECIFICATION**

(45) Date of publication and mention
of the grant of the patent:
**17.06.2020 Bulletin 2020/25**

(51) Int Cl.:
***H04W 24/02*** *(2009.01)*      ***H04W 16/20*** *(2009.01)*

(21) Application number: **17205013.0**

(22) Date of filing: **01.12.2017**

(54) **DETERMINING OPTIMAL DEPLOYMENT OF EXTENDERS IN A WLAN**

BESTIMMUNG DES OPTIMALEN EINSATZES VON STRECKMITTELN IN EINEM WLAN

DÉTERMINATION DU DÉPLOIEMENT OPTIMAL D'EXTENSEURS DANS UN RÉSEAU LOCAL SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.06.2019 Bulletin 2019/23**

(73) Proprietor: **Nokia Solutions and Networks Oy
02610 Espoo (FI)**

(72) Inventors:
• **Gacanin, Haris
2018 Antwerpen (BE)**

• **Atawia, Ramy
2018 Antwerpen (BE)**

(74) Representative: **IP HILLS NV
Hubert Frère-Orbanlaan 329
9000 Gent (BE)**

(56) References cited:
**EP-A2- 2 750 431        WO-A2-2005/029277
US-A1- 2014 376 529      US-A1- 2016 302 079**

Printed by Jouve, 75001 PARIS (FR)

**Description**

**Technical Field**

The present invention generally relates to wireless local area networks, abbreviated WLANs, like for instance indoor Wi-Fi networks that rely on an access point, abbreviated AP, and a large number of extenders. The invention more particularly concerns optimal deployment of the extenders in such WLANs.

**Background**

The article "Genetic Algorithm to Optimize Node Placement and Configuration for WLAN Planning" from the authors T. Vanhatupa et al., published in IEEE ISWCS 2007, and the article "Minimum AP Placement for WLAN with Rate Adaptation Using Physical Interference Model" from the authors Zhongming Zheng et al., published at IEEE Globecom, 2010, describe Wi-Fi deployment approaches that focus on optimizing the capacity. This first class of solutions for deployment of WLANs involves finding the optimal number and location of APs that minimizes interference and/or maximizes signal power and/or minimizes the number of exposed nodes to enable simulatenous transmission.
The article "A WLAN Planning Method for Indoor Positioning System" from the authors Z. Zhang et al., published in 2016 International Conference on Information Networking (ICOIN), pg. 303-307, and the article "A Novel Access Point Placement Approach for WLAN-Based Location Systems from the authors Shih-Hau Fang et al., published at IEEE WCNC, 2010 on the other hand describe Wi-Fi deployment approaches that focus on localization, typically restricted to APs with wired backhaul. The localziation centric techniques focus on deploying APs that minimize the dilution of percision (DoP) for trilateration based localization techniques, or increase the line of sight between APs and user devices to improve angle of arrival (AoA) based location estimation, or maximize the difference in received signal strength (RSS) for fingerprinting based localization techniques.
The known capacity and localization objectives may result in different configurations. For instance, the capacity might be maximized by uniformly placing the APs in a linear pattern which will result in a huge location ambiguity, i.e. large dilution of percision (DoP) in case of trilateration based localization. In another example, placing the APs away from each other to enable simultaneous transmission, will result in a small number of anchors being available at the same grid for trilateration or fingerprinting based localization.
More recently, the article "Modeling and Performance Study of AP Placement Framework for Indoor Location-Awareness and Network Performance" from authors Sungwoo Tak et al., published in the Proceedings of the 8th International Conference on Ubiquitous Information Management and Communication, 2014, and the article "A New Approach to Design a WLAN-Based Positioning System" from authors You Zheng et al., published in Signal Processing and Communication Systems (ICSPCS) 4th International Conference, 2010, started to consider multi-objective WLAN deployment such as coverage or Quality of Service (QoS) with localization. However, both approaches considered fingerprinting localization which aims to maximzie the difference between the Received Signal Strength (RSS) from the different APs at the same grid. For future Wi-Fi networks, trilateration techniques are more desired to leverage the large number of deployed APs and extenders, and further avoid the burden of constructing the fingerprinting database.

**Summary**

There is a general desire to determine a more optimal WLAN deployment that balances capacity or the end-user's throughput with the availability of accurate localization such that high throughput applications and localization services are supported. While extender locations can be changed occasionaly in existing solutions based on neighboring environment and user demands, a more optimal WLAN deployment algorithm has to react in real-time to guarantee a high capacity and the desired localization accuracy at any time. Since trilateration based localization is sensitive to both the variance in the estimated distance between user device and AP, and sensitive to the relative locations of the APs that are used as anchors, a new approach to handle the trade-off between the deployment of such trilateration localization technique and the capacity based WLAN setup is prompted.
Embodiments of the invention disclose a computer-implemented method to determine an optimal deployment of extenders in a wireless local area network or WLAN, the method being defined by claim 1, comprising the steps of:

   A. collecting device information of an access point, extenders and user devices in the WLAN;
   B. determining a maximum theoretic capacity C' of the WLAN from the device information;
   C. collecting channel information from the access point, extenders and user devices in the WLAN;
   D. determining a current capacity C of the WLAN from the channel information;
   E. determining a target capacity C* for the WLAN from the current capacity and a previous iteration of the target capacity, wherein the target capacity is set equal to the theoretic capacity in an initial iteration; and

F. comparing the current capacity with the target capacity to evaluate a current deployment of the extenders, and when the current capacity differs from the target capacity by more than a predetermined capacity threshold, the method further iteratively comprises the following steps:

G. determining a new deployment of the extenders, the new deployment comprising a new location for one or more of the extenders;

H. collecting location information of the user devices using trilateration localization when the new deployment of extenders is implemented;

I. determining location accuracy in the WLAN from the location information; and

J. recommending the new deployment of the extenders as the optimal deployment when the location accuracy exceeds a predetermined threshold.

Thus, the location of wireless extenders that optimizes both the indoor channel capacity and the trilateration-based localization accuracy according to the invention is found adopting sensed information from user devices, extenders and the access point(s). The algorithm frequently senses the environment to detect the optimality of the current setup from the perspective of capacity and localization accuracy, calculates a more optimal deployment of extenders (if needed), and recommends the more optimal deployment to the user. The target channel capacity may be modelled using both the maximum value (according to the type of access nodes) and the measured values from user devices, while localization accuracy may be determined using the estimated geometric dilution of percision (GDoP) and the variance of the distance. The GDoP metric is a function of both the sensed user information, like for instance the RSS, the time of arrival, etc., and the locations of anchor nodes for each user device. This allows the algorithm to pick the locations that will have a stable channel in order to improve the localization accuracy.

In a first step, device information of the access point(s), extenders and user devices is collected. The device information may for instance comprise the MAC address and other information enabling to determine the transmission/reception capabilities of these devices such as for instance supported standards, available frequency bands, maximum bit rates supported, etc. The device information may be collected remotely using for instance the TR181 protocol, may be collected from the vendor website, may be collected from device data sheets, or may be collected from a combination of the foregoing. The collected device information thereupon is used to estimate the maximum theoretic capacity C'. The maximum theoretic capacity C' may for instance correspond to the maximum achievable transmission/reception bit rate at the user devices given the current number of deployed access point(s) and extenders. Further, the method foresees in collecting channel information from the access point(s), extenders and user devices in the WLAN. The channel information comprises information that enables to estimate the current transmission/reception capabilities, and includes for instance the busy time, received signal strength (RSS), the modulation and coding scheme (MCS) used or sensed at the access point(s), the extenders' backhaul, and the user devices. The collected channel information is used to estimate the current capacity C of the WLAN. According to the invention, a target capacity C* is then calculated for the WLAN and the current capacity is compared with the target capacity in order to determine of a new deployment of the extenders with different location(s) for one or more of the extenders is desired. The target capacity C* may for instance initially be set equal to the maximum achievable transmission/reception bit rate at the user devices given the current number of deployed access node(s) and extenders. The target capacity may be updated iteratively over time using the measured capacity at different deployments and the previously estimated target capacity. Based on the target capacity C* and the measured current capacity C, the controller or processor executing the method according to the present invention shall evaluate the optimality of the current deployment. In case the current capacity C stays more than a predetermined capacity threshold below the target capacity C* the current deployment is found to be sub-optimal and the decision is made to determine and propose a new deployment. Such new deployment refers to a new location for at least one of the extenders, as a result of which a new current capacity will be achieved that better approaches the target capacity C*. A new WLAN configuration with higher capacity can be obtained by optimizing the location of the extender whose backhaul and/or fronthaul capacity values are below the target capacity. The location of the extender with the lowest back-haul capacity may for instance be optimized stepwise while preserving that user devices remain connected to the same extender. For each new deployment, i.e. each new location of the selected extender, the algorithm will evaluate the resulting trilateration localization accuracy. Thereto, localization information is collected for the user devices as soon as the new deployment is implemented. The accuracy of the collected location information is estimated, using for instance the Dilution of Precision or DoP and variations of the measured locations of the user devices. As long as the localization accuracy stays below a desired accuracy, the new deployment is found to be sub-optimal and a new deployment, i.e. new location for the extender(s), is determined.

In embodiments of the method according to the present invention, defined by claim 2, steps C-J are repeated at regular time intervals.

Indeed, a timer may be involved to regularly check the optimality of capacity and localization accuracy of the current deployment, and to trigger re-execution of the steps C-J.

In embodiments of the method according to the present invention, defined by claim 3, the device information collected in step A comprises one or more of:

- supported WLAN standards;
- available frequency bands;
- available spatial streams;
- a maximum bit rate;
- bandwidth of the operating channel;
- a guard interval;
- an RTS Threshold.

Indeed, device parameters like the supported WLAN standards like for instance the IEEE 802.11 ac standard, and/or the available frequency bands like for instance the 2.4 GHz band, the 5 GHz band or the 60 GHz band, and/or the available spatial streams like for instance the inner ring, middle ring and outer ring in a 3 spatial stream IEEE 802.11n compliant device, and/or the maximum achievable transmission/reception bit rate, and/or the bandwidth of the operating channel, and/or the guard interval time used to avoid the distinct transmissions interfere, and/or the Request To Send Threshold or RTS Threshold or frequency whereat user devices are asked permission to send may be used to determine the maximum capacity C'. Obviously, the list of device parameters that may be considered in determining the maximum capacity C' is endless and therefore not limited to the above examples.

In embodiments of the method according to the present invention, defined by claim 4, the channel information collected in step C comprises one or more of:

- a modulation and coding scheme or MCS;
- a last measured downlink data rate;
- a last measured uplink data rate.

Indeed, in order to determine the current capacity C, channel information must be collected on the channels between access point(s), extenders and user devices. The measured uplink and/or downlink rates may be helpful in estimating the current capacity C, but also more complex network measurements like the modulation and coding scheme (MCS) at each user device, extender and access point may be collected in order to estimate the current capacity C more accurately. Again, the above examples are non-exhaustive, and other measurements may be performed in alternative embodiments of the method according to the invention in order to be able to estimate the current total capacity C of the WLAN.

In embodiments of the method according to the present invention, defined by claim 5, determining a new deployment of the extenders in step G comprises:

- determining the extender i* with lowest back-haul capacity towards the access point;
- determining distances $d_{j,i*}$ between the user devices j and the extender i*;
- determining distances $d_{j,i}$ between the user devices and other extenders of the extenders;
- determining the maximum distance maxD at which extender i* can be moved in back-haul direction as maxD = max $(d_{j,i*} - d_{j,i})$;
- determining a distance d* = maxD / n with n being an integer value greater than 1, n being initially set equal to maxD and then decremented by 1 until the current capacity exceeds the target capacity or until n reaches its lowest value; and
- changing the location of extender i* over a distance d* in back-haul direction.

Thus, the location of the extender with lowest backhaul capacity is optimised stepwise while preserving that the user devices remain connected to the same extender. If n reaches the lowest value and the target capacity C* is not yet achieved or the backhaul capacity surpassed the fronthaul capacity of the extender, cooperative transmission may be considered to improve the fronthaul capacity. The network controller performing the method according to the present invention shall request the access point to check the availability for simultaneous transmission. This involves contacting the nearest extender to extender i* to report its measurements and load. In case of a low loaded extender with spatially separated users to the users connected to extender i*, cooperative transmission is enabled, and user devices connected to extender i* may be served by the nearest extender as well.

In embodiments of the method according to the present invention, defined by claim 6, collecting location information in step H comprises collecting from each user device j out of the user devices for a predetermined time duration t* a received signal strength value $RSS_{i,j}$ for each extender i out of the extenders.

Indeed, to collect location information, the RSS values from extender i* to each user device j may be recorded in a vector for a time duration t*, denoted $RSS_{i,j}$.

In embodiments of the method according to the present invention, defined by claim 7, determining location accuracy in step I comprises:

- determining for each extender i out of the extenders a maximum variance value $\sigma_i$ for its received signal strength value across the user devices;
- determining the Geometric Dilution of Precision or GDoP; and
- determining the product of the maximum variance values $\sigma_i$ and the GDoP as measure for the location accuracy.

Indeed, the variance values for the RSS values reported by the extenders and the calculated GDoP represent, when multiplied, a measure for the localization accuracy and hence enable to determine users with unknown or imprecise locations.

In embodiments of the method according to the present invention, defined by claim 8, the location accuracy exceeds the predetermined threshold in step J when the product of the maximum variance values $\sigma_i$ and the GDoP is below a given minimal accuracy level L'.

Thus, based on the calculated GDoP and variations, the localization accuracy can be evaluated. If their multiplication is above a minimal accuracy level L', the localization accuracy is found to be suboptimal and a new location of the extender, i.e. a new deployment, has to be analysed. Otherwise, the deployment is found to be optimal for both capacity and localization accuracy and will be recommended to the user.

In addition to a computer-implemented method as defined by claim 1, the present invention also concerns a computer program product as defined by claim 9, comprising computer-executable instructions for performing the method according to the invention when the program is run on a computer.

The present invention further also concerns a computer readable storage medium as defined by claim 10, comprising the computer program product according to the invention, and a data processing system programmed for carrying out the method according to the invention, as defined by claim 11.

## Brief Description of the Drawings

Fig. 1 illustrates a first sub-optimal WLAN deployment, as determined by a prior art solution;

Fig. 2 illustrates a second sub-optimal WLAN deployment, as determined by a prior art solution;

Fig. 3 represents a functional block scheme of a network controller or processor programmed to carry out an embodiment of the method to determine an optimal WLAN deployment according to the present invention;

Fig. 4 represents a pseudo flow chart of an embodiment of the method to determine an optimal WLAN deployment according to the present invention;

Fig.5 is a table illustrating maximum capacity C' as a function of certain device parameters, used in an embodiment of the method to determine an optimal WLAN deployment according to the present invention; and

Fig. 6 is a table illustrating calculated distances between user devices connected to extender i* and all extenders in a WLAN, as used in an embodiment of the method to determine an optimal WLAN deployment according to the present invention.

## Detailed Description of Embodiment(s)

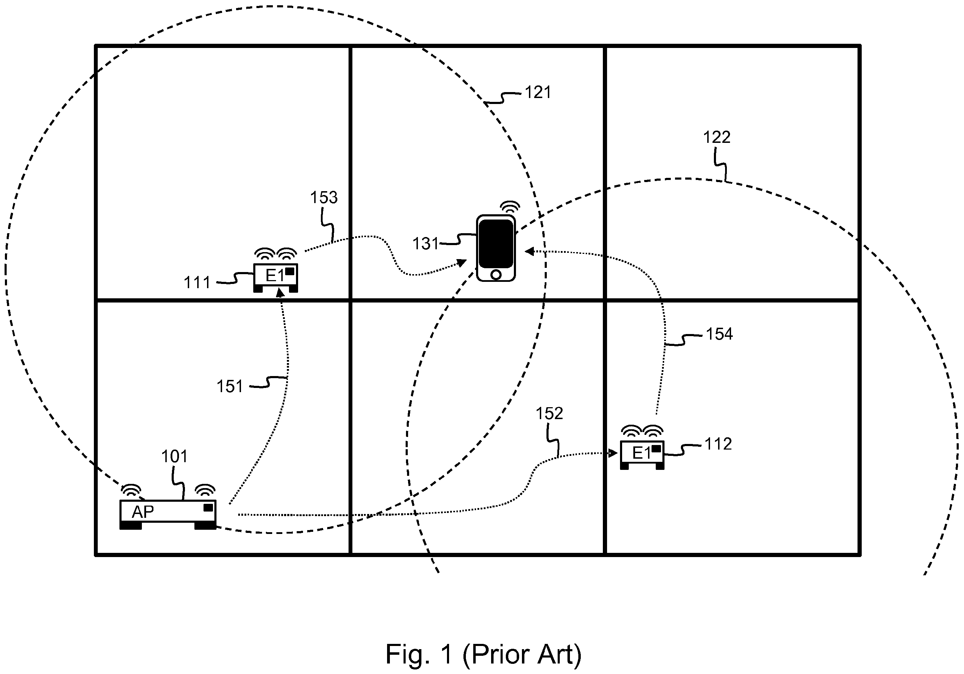

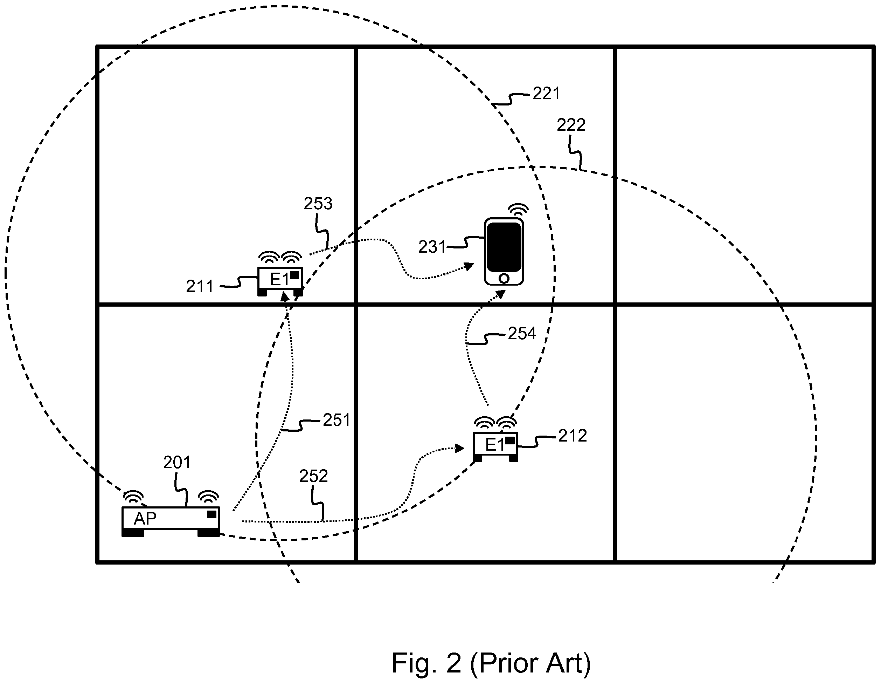

Fig. 1 and Fig. 2 illustrate two sub-optimal WLAN deployments, as determined by prior art solutions, in a building with six rooms.

Fig. 1 shows a Wi-Fi access point 101, a first extender 111 with coverage range 121, and a second extender 112 with coverage range 122. Extender 111 connects with access point 101 via link 151. Extender 112 connects with access point 101 via link 152. Fig. 1 further shows a user device 131 that is reachable by the first extender 111 via link 153 and reachable by the second extender 112 via link 154. The illustrated WLAN deployment has high localization accuracy due to a small dilution of percision (DoP) but has low capacity due to the poor backhaul link of extender 112.

Fig. 2 shows a Wi-Fi access point 201, a first extender E1 or 211 with coverage range 221, and a second extender E2 or 212 with coverage range 222. Extender 211 connects with access point 201 via link 251. Extender 212 connects with access point 201 via link 252. Fig. 2 further also shows a user device 231 that is reachable by the first extender 211 via link 253 and reachable by the second extender 212 via link 254. The illustrated WLAN deployment has low localization accuracy due to a high dilution of percision (DoP), but both extenders 211 and 212 are able to provide high capacity to user device 131 through cooperative transmission.

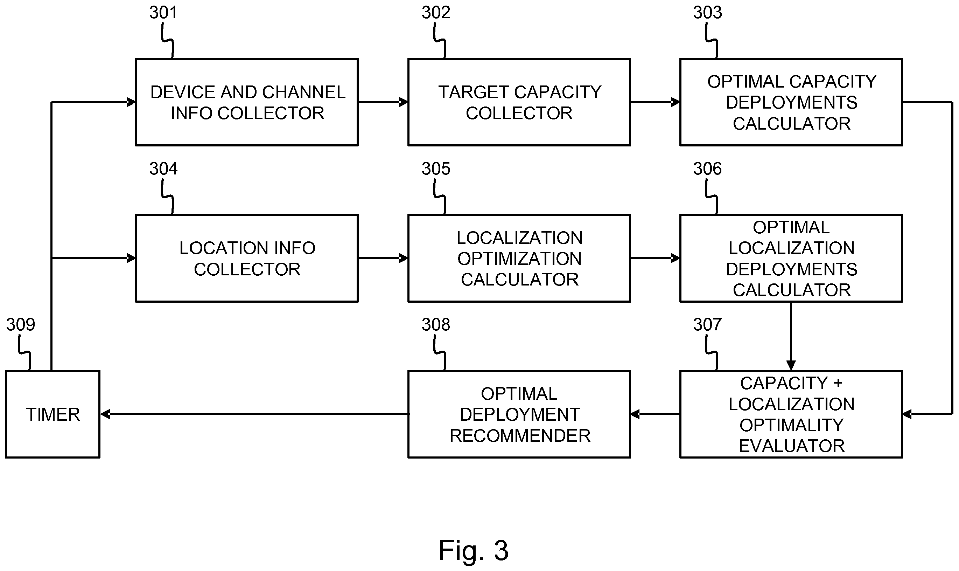

Fig. 3 represents a functional block scheme of a network controller or processor programmed to carry out an embodiment of the method to determine an optimal WLAN deployment according to the present invention, combining optimisation of the capacity with a desired trilateration based localization accuracy.

The device and channel information collector 301 collects device and channel information from the access point(s), extenders and user devices in the WLAN. The device information includes information such as the MAC address of the access point(s), extenders and user devices, in order to determine their transmission/reception capabilities. In addition, channel information such as the busy time, Received Signal Strength or RSS values, and Modulation and Coding Scheme or MCS values for the access point(s), the extenders' backhaul channel towards the access point, and user devices are collected.

The target capacity calculator 302 combining the two types of collected information to evaluate the capacity performance of the current deployment. In particular, the target capacity calculator 302 determines the target capacity, i.e. the maximum achievable transmission/reception bitrates at the user devices given the current deployment. The target capacity may initially correspond to a theoretic maximum achievable capacity obtained from data sheets or device specifications, but over time may be adaptively learned using the network measurements at different deployments.

Based on the target capacity, the optimal capacity deployment calculator 303 evaluates the optimality of the current deployment and proposes new deployments. Each new deployment refers to a new location of one extender or multiple extenders, and results in a new value of the total current capacity.

The location information collector 304 collects information from the access point(s), extenders and user devices required to determine the location of each user device through trilateration. An example of such information is the Received Signal Strentgth or RSS, and the Round Trip Time or RTT of all access point(s) and extenders at the user device(s) whose location(s) are estimated, as well as the locations of the access point(s) and extenders, the variance in the RSS, etc.

Based on the collected location information, the location optimality calculator 305 evaluates the optimality of the user device locations in order to determine user devices with imprecise or even unknown locations. An example of a region with unavailable or imprecise location information is a region wherein user devices are reporting RSS levels from only two access point(s) or extenders while trilateration needs at least three anchor nodes in order to accurately determine the location of a user device.

The optimal localization deployments calculator 306 determines new deployments that improve the localization accuracy for all user devices. Similar to the optimal capacity deployments calculation by unit 303, this involves evaluating different locations of one or multiple extenders with various localization accuracies.

The results of the optimal capacity deployment calculator 303 and the optimal localization deployment calculator 306 are jointly evaluated for optimality of both capacity and localization by the capacity + localization optimality evaluator 307 which selects the best compromise deployment that ensures maximum capacity and highest localization accuracy.

At last, this best compromise is recommended to the user or network operator by the optimal deployment recommender 308 of the network controller or processor according to the present invention.

A timer 309 is involved to regularly trigger checking the optimality of localization and capacity of the current deployment and to re-execute the above described process when needed.

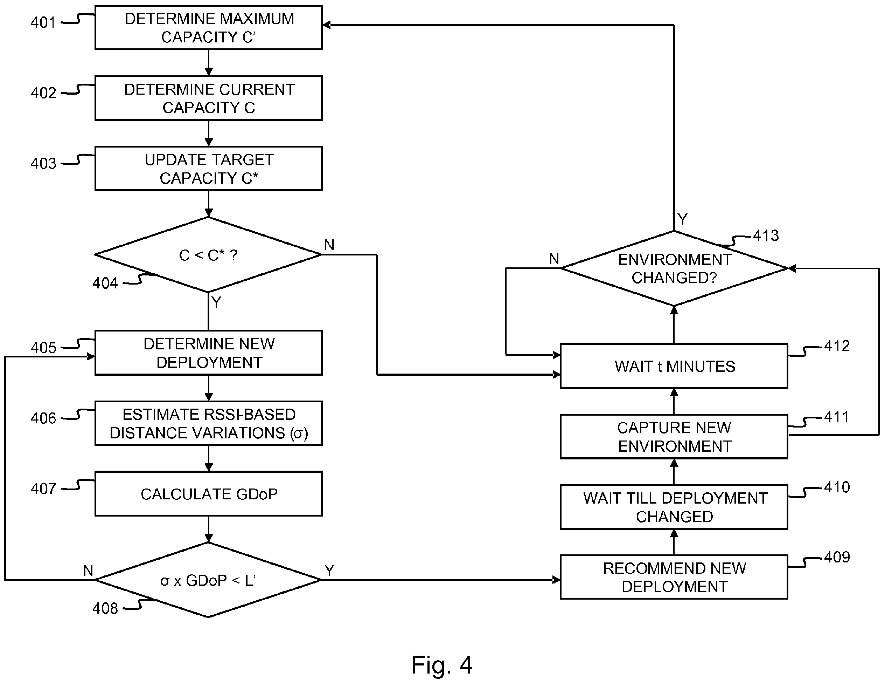

Fig. 4 represents a pseudo flow chart of an embodiment of the method to determine an optimal WLAN deployment according to the present invention.

In step 401, the maximum capacity C' is determined. Based on the device information of the used access point(s) and extenders, the maximum theoretical capacity can be determined. This maximum capacity depends for instance on the available frequency bands, e.g. 2.4 GHz, 5 GHz and/or 60 GHz, the number of available spatial streams, the supported Wi-Fi standard, e.g. IEEE 802.11ac, and the bandwidth of the operating channel, e.g. 20 MHz, 40 MHz, 80 MHz, 160 MHz, possibly among other device information collected from the access point(s), extenders and user devices. The network controller may for instance be able to fetch the Organizationally Unique Identifier or OUI, which is the first 3 bytes of the MAC address and which corresponds to the manufacturer identification of the device. Other information on the device capabilities such as the number of interfaces or bands can be also detected remotely using the TR181 protocol or through consultation of the vendor website and/or device data sheet. The device and channel info collector 301 may for instance collect the following information:

S' = Device.WiFi.Radio.{i}.SupportedStandards
B' = Device.WiFi.Radio.{i}.MaxBitRate
W' = Device.WiFi.Radio.{i}.OperatingChannelBandwidth
G' = Device.WiFi.Radio.{i}.GuardInterval
H' = Device.WiFi.Radio.{i}.RTSThreshold

The maximum theoretical capacity C' is thereupon calculated in step 401 as a function of some or all of the above parameters:

$$C' = f(S', B', W', G', H')$$

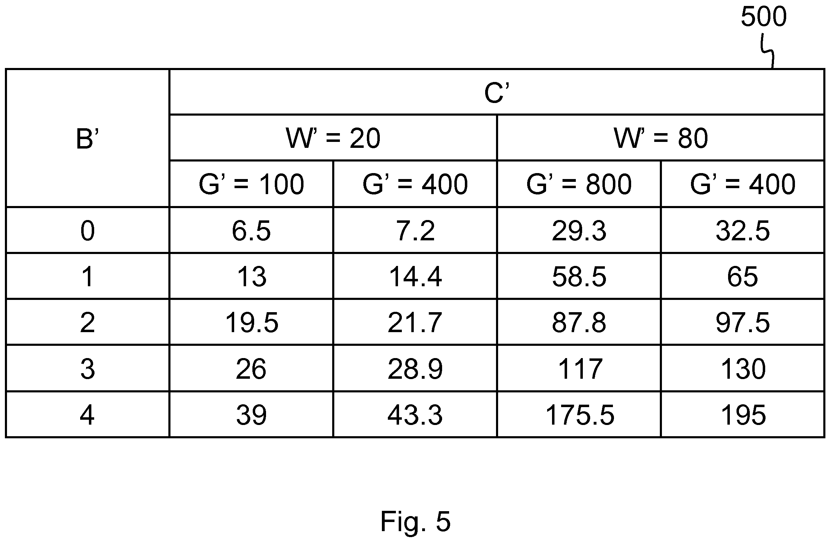

Fig. 5 illustrates in a table an example of the maximum theoretical capacity C' reported in the IEEE 802.11 ac standard with RTS/CTS disabled. Lab measurements have demonstrated that enabling RTS/CTS, e.g. H' = 100, drops the maximum theoretical capacity C' to 40 % of the reported values in Fig. 5. In addition, the number of hops between the extender and access point, and the number of radio interfaces available at the extender will further change the theoretical value. For example, a single band extender, connected directly to the access point will drop the value of the maximum capacity by 55% according to lab measurements.

In step 402, the current capacity C, i.e. the capacity of the current deployment, is determined using network measurements such as the modulation and coding scheme or MCS at each user device and at the extender backhaul. The current capacity C can for instance be determined as follows:

$$C = \text{sum} \left( M[j]^{(u)} + M[j]^{(u')} + M[j]^{(e)} \right) / N$$

with M[j] being collected as:
Device.WiFi.AccessPoint.{i}.AssociatedDevice.{j}.LastDataDownlinkRate

Herein:

$M[j]^{(u)}$ is the MCS of the user device connected directly to the access point;
$M[j]^{(u')}$ is the MCS of the user device connected to the extender; and
$M[j]^{(e)}$ is the MCS of the extender's backhaul, i.e. the link connecting the access point with the extender; and
N is the number of all devices and extenders associated with the access point.

It has to be noted that rate adaptation is assumed in this case which is enabled by default in all the commercial access points and extenders.

In step 403, the target capacity C* is estimated or updated. The target capacity C* used to evaluate the optimality of the current deployment is updated iteratively using the measured capacity and the previously estimated target capacity value as follows:

$$C^*[t] = ((t-1).C^*[t-1] + C') / t \text{ for } t = [2,T]$$

with C*[t=1] = C'

In step 404, the current deployment capacity C is evaluated through comparison with the target capacity C*. If the measured capacity C at a certain configuration is below the target value C*[t], the current deployment is found to be sub-optimal and a new deployment configuration will be calculated in steps 405-408.

In step 405, a new optimal capacity deployment is determined. A new configuration with higher capacity can be obtained by optimizing the location of the extender whose backhaul and/or fronthaul capacity values are below the target value.

$$i^* = \text{argmax} \left( |M^{(e)} - C^*[t]| \right)$$

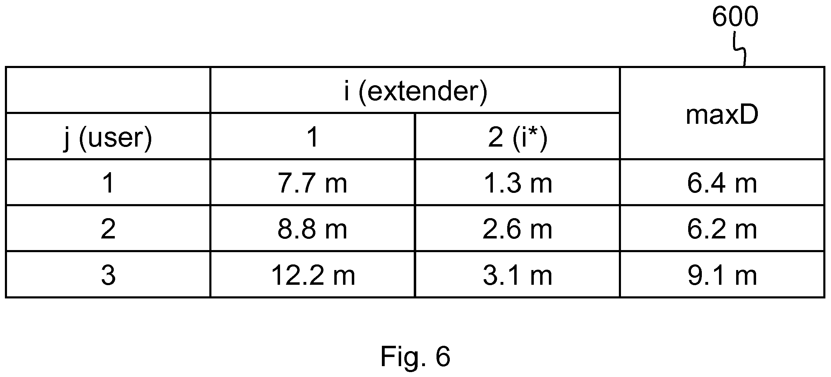

i* in other words is the index of extender with lowest backhaul capacity value. The location of extender i* is optimized such that the user devices remain connected to the same extender as follows. First, the distances between the user devices connected to extender i* and all other extenders are determined using the location information collected by the location information collector 304. These distances are depicted in table 600 in Fig. 6 where it is assumed that two user devices j are present and two extenders i are present, the second extender i=2 corresponding to i*. Based on the distance of the nearest user to the other extender and farthest from extender i*, the maximum distance maxD at which the extender i* can move towards the backhaul is calculated. This maximum backhaul distance maxD is determined as maxD = max $(d_{j,i^*} - d_{j,i})$ for all i≠i*. The algorithm in step 405 will then select a distance d* = maxD / n, where n = [1, maxD]. An initial value of n can be set equal to maxD and then be decremented by 1 meter if there is no improvement in the overall capacity. If n reaches the lowest value and the target capacity is not met or the backhaul capacity surpassed the fronthaul capacity, then cooperative transmission is involved to improve the fronthaul capacity. The network controller will inform the access point to check the availability for simultaneous transmission. This involves informing the nearest extender to extender i* to report its measurements and load. In case of a low loaded extender with spatially separated users to the users connected to extender i*, cooperative transmission is enabled. Thus, users connected to extender i* will be served by the nearest extender to extender i* as well.

For each new deployment, i.e. each new location of an extender determined in step 405, steps 406-408 will evaluate the resulting localization accuracy. In this embodiment it is assumed that RSS based multi-lateration is used to determine the location of user devices. As such, the accuracy of the calculated location will depend on the variance of the RSS and the locations of anchors, i.e. extenders and access point, with respect to the user device.

First, in step 406, the RSSI-based distance variances σ are estimated. All the user devices using the RSS values of extender i* are detected by the network controller and the RSS values from extender i* to each user device j are recorded. For each user device j, the RSS values are recorded in a vector for a time duration t* and denoted by $RSS_{i,j}$. The variance σ is then calculated as:

$$\sigma_{i,j} = \sqrt{\frac{1}{|RSS_{i,j}|} \sum_{k=1}^{|RSS|} (RSS_{i,j}[k] - mean(RSS_{i,j}))}$$

$$\sigma_i = \max(\sigma_{i,j}) \ \forall j$$

In step 407, the Geometric Dilution of Percision or GDoP is calculated. The new location of extender i* will change the GDoP which is calculated as follows:

$$GDoP_j = \sqrt{trace(H_j^T H_j)^{-1}}$$

$$H_j = \begin{bmatrix} \dfrac{x_j - x_1}{d_1} & \dfrac{y_j - y_1}{d_1} \\ \vdots & \vdots \\ \dfrac{x_j - x_i}{d_i} & \dfrac{y_j - y_i}{d_i} \end{bmatrix}$$

$$GDoP = \max(GDoP_j) \ \forall j$$

Where $(x_j, y_j)$ is the unkown location of user device j, and $(x_i, y_i)$ is the location of the $i^{th}$ anchor node, i.e. either an extender or access point.

In step 408, the localization accuracy is evaluated. Based on the calculated GDoP and variations σ, if their multiplication is above a minimal accuracy level L', then the localization is found to be sub-optimal and a new deployment has to be determined in a new iteration of step 405. Otherwise, the deployment is found to be optimal for both capacity and localization, and will be recommended to the user in step 409. The localization can further guide the searching of the optimal capacity deployment by moving the extender i* away from other extenders to improve the DoP. This includes changing only the y location or the x location at a time.

In step 410, the network controller waits until the user moves the extender into the new location, and then captures the environment in step 411. In case the environment has changed, which is verified in step 413, steps 401, 402 and 403 are repeated. The algorithm will wait for another t minutes in step 412 before the above step of verifying if the environment has changed, is re-executed.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The invention is defined by the appended claims.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A computer-implemented method to determine an optimal deployment of extenders (111, 112; 211, 212) in a wireless local area network or WLAN, said method comprising the steps of:

   A. collecting device information of an access point (101; 201), extenders (111, 112; 211, 212) and user devices (131; 231) in said WLAN;
   B. determining (401) a maximum theoretic capacity C' of said WLAN from said device information;
   C. collecting channel information from said access point (101; 201), extenders (111, 112; 211, 212) and user devices (131; 231) in said WLAN;
   D. determining (402) a current capacity C of said WLAN from said channel information;
   E. determining (403) a target capacity C* for said WLAN from said current capacity C and a previous iteration of said target capacity C*, wherein said target capacity C* is set equal to said maximum theoretic capacity C' in an initial iteration; and
   F. comparing (404) said current capacity C with said target capacity C* to evaluate a current deployment of said extenders (111, 112; 211, 212),

   and when said current capacity differs C from said target capacity C* by more than a predetermined capacity threshold, said method further iteratively comprises the following steps:
   G. determining (405) a new deployment of said extenders (111, 112; 211, 212), said new deployment comprising a new location for one or more of said extenders (111, 112; 211, 212);
   H. collecting location information of said user devices (131; 231) using trilateration localization when said new deployment of extenders (111, 112; 211, 212) is implemented;
   I. determining (406, 407, 408) location accuracy in said WLAN from said location information; and
   J. recommending (409) said new deployment of said extenders (111, 112; 211, 212) as said optimal deployment when said location accuracy exceeds a predetermined threshold.

2. The method according to claim 1, wherein steps C-J are repeated at regular time intervals.

3. The method according to claim 1, wherein said device information collected in step A comprises one or more of:

   - supported WLAN standards;
   - available frequency bands;
   - available spatial streams;
   - a maximum bit rate;
   - bandwidth of the operating channel;
   - a guard interval;
   - an RTS Threshold.

4. The method according to claim 1, wherein said channel information collected in step C comprises one or more of:

   - a modulation and coding scheme or MCS;
   - a last measured downlink data rate;
   - a last measured uplink data rate.

5. The method according to claim 1 wherein determining a new deployment of said extenders in step G comprises:

   - determining the extender i* with lowest back-haul capacity towards said access point;
   - determining distances $d_{j,i^*}$ between said user devices j and said extender i*;
   - determining distances $d_{j,i}$ between said user devices and other extenders of said extenders;
   - determining the maximum distance maxD at which extender i* can be moved in backhaul direction as maxD = max ($d_{j,i*}$ - $d_{j,i}$);
- determining a distance d* = maxD / n with n being an integer value greater than 1, n being initially set equal to maxD and then decremented by 1 until said current capacity exceeds said target capacity or until n reaches its lowest value; and
- changing the location of extender i* over a distance d* in backhaul direction.

6. The method according to claim 1, wherein collecting location information in step H comprises collecting from each user device j out of said user devices for a predetermined time duration t* a received signal strength value $RSS_{i,j}$ for each extender i out of said extenders.

7. The method according to claim 6, wherein determining location accuracy in step I comprises:

    - determining (406) for each extender i out of said extenders a maximum variance value $\sigma_i$ for its received signal strength value across said user devices;
    - determining (407) the Geometric Dilution of Precision or GDoP; and
    - determining the product of said maximum variance values $\sigma_i$ and said GDoP as measure for said location accuracy.

8. The method according to claim 7, wherein said location accuracy exceeds said predetermined threshold in step J when said product of said maximum variance values $\sigma_i$ and said GDoP is below a given minimal accuracy level L'.

9. A computer program product comprising computer-executable instructions for performing the method according to claim 1 when the program is run on a computer.

10. A computer readable storage medium comprising the computer program product according to claim 9.

11. A data processing system programmed for carrying out the method according to claim 1.


**Patentansprüche**

1. Computerimplementiertes Verfahren zum Bestimmen eines optimalen Einsatzes von Streckmitteln (111, 112; 211, 212) in einem drahtlosen lokalen Netzwerk oder WLAN, wobei das Verfahren die folgenden Schritte umfasst:

    A. Sammeln von Geräteinformationen eines Zugangspunktes (101; 201), von Streckmitteln (111, 112; 211, 212) und von Benutzergeräten (131; 231) in dem WLAN;
    B. Bestimmen (401) einer maximalen theoretischen Kapazität C' des WLAN aus den Geräteinformationen;
    C. Sammeln von Kanalinformationen aus dem Zugangspunkt (101; 201), den Streckmitteln (111, 112; 211, 212) und den Benutzergeräten (131; 231) in dem WLAN;
    D. Bestimmen (402) einer aktuellen Kapazität C des WLAN aus den Kanalinformationen;
    E. Bestimmen (403) einer Sollkapazität C* für das WLAN aus der aktuellen Kapazität C und einer vorherigen Iteration der Sollkapazität C*, wobei die Sollkapazität C* in einer anfänglichen Iteration gleich der maximalen theoretischen Kapazität C' gesetzt wird; und
    F. Vergleichen (404) der aktuellen Kapazität C mit der Sollkapazität C*, um einen aktuellen Einsatz der Streckmittel (111, 112; 211, 212) zu beurteilen,
    und wobei, wenn die aktuelle Kapazität C von der Sollkapazität C* um mehr als einen vorbestimmten Kapazitätsschwellenwert abweicht, das Verfahren ferner iterativ die folgenden Schritte umfasst:
    G. Bestimmen (405) eines neuen Einsatzes der Streckmittel (111, 112; 211, 212), wobei der neue Einsatz eine neue Position für eines oder mehrere der Streckmittel (111, 112; 211, 212) umfasst;
    H. Sammeln von Positionsinformationen der Benutzergeräte (131; 231) mittels Trilaterationslokalisierung, wenn der neue Einsatz der Streckmittel (111, 112; 211, 212) implementiert wird;
    I. Bestimmen (406, 407, 408) der Positionsgenauigkeit in dem WLAN aus den Positionsinformationen; und
    J. Empfehlen (409) des neuen Einsatzes der Streckmittel (111, 112; 211, 212) als optimalen Einsatz, wenn die Positionsgenauigkeit einen vorbestimmten Schwellenwert überschreitet.

2. Verfahren nach Anspruch 1, wobei die Schritte C-J in regelmäßigen Zeitabständen wiederholt werden.

3. Verfahren nach Anspruch 1, wobei die in Schritt A gesammelten Geräteinformationen eines oder mehrere der folgenden Elemente umfassen:

- unterstützte WLAN-Standards;
- verfügbare Frequenzbänder;
- verfügbare räumliche Ströme;
- eine maximale Bitrate;
- Bandbreite des Betriebskanals;
- ein Schutzintervall;
- einen RTS-Schwellenwert.

4. Verfahren nach Anspruch 1, wobei die in Schritt C gesammelten Kanalinformationen eines oder mehrere der folgenden Elemente umfassen:

- ein Modulations- und Kodierungsschema oder MCS;
- eine zuletzt gemessene Abwärtsstreckendatenrate;
- eine zuletzt gemessene Aufwärtsstreckendatenrate.

5. Verfahren nach Anspruch 1, wobei das Bestimmen eines neuen Einsatzes der Streckmittel in Schritt G umfasst:

- Bestimmen des Streckmittels i* mit der geringsten Rücktransportkapazität zu dem Zugangspunkt;
- Bestimmen der Entfernungen $d_{j,i*}$ zwischen den Benutzergeräten j und dem Streckmittel i*;
- Bestimmen der Entfernungen $d_{j,i}$ zwischen den Benutzergeräten und anderen Streckmitteln der Streckmittel;
- Bestimmen der maximalen Entfernung maxD, um die das Streckmittel i* in Rücktransportrichtung als maxD = max $(d_{j,i*}-d_{j,i})$ verschoben werden kann;
- Bestimmen einer Entfernung d* = maxD/n, wobei n ein ganzzahliger Wert größer als 1 ist, wobei n zunächst gleich maxD gesetzt und dann um 1 verringert wird, bis die aktuelle Kapazität die Sollkapazität überschreitet oder bis n seinen niedrigsten Wert erreicht; und
- Ändern der Position des Streckmittels i* über eine Entfernung d* in Rücktransportrichtung.

6. Verfahren nach Anspruch 1, wobei das Sammeln von Positionsinformationen in Schritt H das Sammeln eines empfangenen Signalstärkewertes $RSS_{i,j}$ für jedes Streckmittel i aus den Streckmitteln von jedem Benutzergerät j aus den Benutzergeräten für eine vorbestimmte Zeitspanne t* umfasst.

7. Verfahren nach Anspruch 6, wobei das Bestimmen der Positionsgenauigkeit in Schritt I umfasst:

- Bestimmen (406) für jedes Streckmittel i aus den Streckmitteln einen maximalen Abweichungswert $\sigma_i$ für seinen empfangenen Signalstärkewert über die Benutzergeräte hinweg;
- Bestimmen (407) der geometrischen Verringerung der Genauigkeit oder GDoP; und
- Bestimmen des Produkts der maximalen Varianzwerte $\sigma_i$ und der GDoP als Maß für die Positionsgenauigkeit.

8. Verfahren nach Anspruch 7, wobei die Positionsgenauigkeit den vorbestimmten Schwellenwert in Schritt J überschreitet, wenn das Produkt aus den maximalen Varianzwerten $\sigma_i$ und der GDoP unterhalb eines vorgegebenen minimalen Genauigkeitsgrades L' liegt.

9. Computerprogrammprodukt, umfassend computerausführbare Anweisungen zum Durchführen des Verfahrens nach Anspruch 1, wenn das Programm auf einem Computer ausgeführt wird.

10. Computerlesbares Speichermedium, umfassend das Computerprogrammprodukt nach Anspruch 9.

11. Datenverarbeitungssystem, das zum Durchführen des Verfahrens nach Anspruch 1 programmiert ist.


**Revendications**

1. Procédé mis en œuvre par ordinateur pour déterminer un déploiement optimal d'extenseurs (111, 112 ; 211, 212) dans un réseau local sans fil ou WLAN, ledit procédé comprenant les étapes de :

A. collecte d'informations de dispositifs d'un point d'accès (101 ; 201), d'extenseurs (111, 112 ; 211, 212) et de dispositifs utilisateurs (131 ; 231) dans ledit WLAN ;

B. détermination (401) d'une capacité théorique maximale C' dudit WLAN à partir desdites informations de dispositifs ;

C. collecte d'informations de canaux à partir desdits point d'accès (101 ; 201), extenseurs (111, 112 ; 211, 212) et dispositifs utilisateurs (131 ; 231) dans ledit WLAN ;

D. détermination (402) d'une capacité actuelle C dudit WLAN à partir desdites informations de canaux ;

E. détermination (403) d'une capacité cible C* dudit WLAN à partir de ladite capacité actuelle C et d'une itération antérieure de ladite capacité cible C*, dans lequel ladite capacité cible C* est réglée égale à ladite capacité théorique maximale C' dans une itération initiale ; et

F. comparaison (404) de ladite capacité actuelle C à ladite capacité cible C* pour évaluer un déploiement actuel desdits extenseurs (111, 112 ; 211, 212),

et quand ladite capacité actuelle diffère de ladite capacité cible C* par plus d'un seuil de capacité prédéterminé, ledit procédé comprend en outre de manière itérative les étapes suivantes :

G. détermination (405) d'un nouveau déploiement desdits extenseurs (111, 112 ; 211, 212), ledit nouveau déploiement comprenant un nouvel emplacement pour un ou plusieurs desdits extenseurs (111, 112 ; 211, 212) ;

H. collecte d'informations desdits dispositifs utilisateurs (131 ; 231) à l'aide d'une localisation par trilatération quand ledit nouveau déploiement des extenseurs (111, 112; 211, 212) est mis en œuvre ;

I. détermination (406, 407, 408) d'une précision d'emplacement dans ledit WLAN à partir desdites informations d'emplacement ; et

J. recommandation (409) dudit nouveau déploiement desdits extenseurs (111, 112 ; 211, 212) en tant que dit déploiement optimal quand ladite précision d'emplacement dépasse un seuil prédéterminé.

2. Procédé selon la revendication 1, dans lequel les étapes C à J sont répétées à intervalles réguliers.

3. Procédé selon la revendication 1, dans lequel lesdites informations de dispositifs collectées à l'étape A comprennent une ou plusieurs des informations suivantes :

  - normes de WLAN prises en charge ;
  - bandes de fréquences disponibles ;
  - flux spatiaux disponibles ;
  - débits binaires maximum ;
  - largeur de bande du canal d'exploitation ;
  - intervalle de garde ;
  - seuil RTS.

4. Procédé selon la revendication 1, dans lequel lesdites informations de canaux collectées à l'étape C comprennent une ou plusieurs des informations suivantes :

  - plan de modulation et de codage, ou MCS ;
  - dernier débit de données sur liaison descendante mesuré ;
  - dernier débit de données sur liaison montante mesuré.

5. Procédé selon la revendication 1 dans lequel la détermination d'un nouveau déploiement desdits extenseurs à l'étape G comprend :

  - la détermination de l'extenseur i* ayant la plus basse capacité d'amenée vers ledit point d'accès ;
  - la détermination de distances $d_{j,i^*}$ entre lesdits dispositifs utilisateurs j et ledit extenseur i* ;
  - la détermination de distances $d_{j,i}$ entre lesdits dispositifs utilisateurs et d'autres extenseurs desdits extenseurs ;
  - la détermination de la distance maximale maxD à laquelle l'extenseur i* peut être déplacé dans la direction d'amenée en tant que maxD = max $(d_{j,i^*} - d_{j,i})$ ;
  - la détermination d'une distance d* = maxD / n, n étant une valeur entière supérieure à 1, n étant réglé initialement égal à maxD puis décrémenté par 1 jusqu'à ce que ladite capacité actuelle dépasse ladite capacité cible ou que n atteigne sa valeur la plus basse ; et
  - le changement de la position de l'extenseur i* sur une distance d* dans la direction d'amenée.

6. Procédé selon la revendication 1, dans lequel la collecte d'informations d'emplacement à l'étape H comprend la collecte depuis chaque dispositif utilisateur j desdits dispositifs utilisateurs pendant une durée de temps prédéterminée t* d'une valeur de force de signal reçu $RSS_{ij}$ pour chaque extenseur i desdits extenseurs.

**7.** Procédé selon la revendication 6, dans lequel la détermination d'une précision d'emplacement à l'étape I comprend :

- la détermination (406) pour chaque extenseur i desdits extenseurs d'une valeur de variance maximale $\sigma_i$ de sa valeur de force de signal reçu pour tous lesdits dispositifs utilisateurs ;
- la détermination (407) de la dilution géométrique de la précision ou GDoP ; et
- la détermination du produit desdites valeurs de variance maximales $\sigma_i$ et de ladite GDoP en tant que mesure de ladite précision d'emplacement.

**8.** Procédé selon la revendication 7, dans lequel ladite précision d'emplacement dépasse ledit seuil prédéterminé à l'étape J quand ledit produit desdites valeurs de variance maximales $\sigma_i$ et de ladite GDoP est inférieur à un niveau de précision minimale donné L'.

**9.** Produit-programme informatique comprenant des instructions exécutables par ordinateur pour réaliser le procédé selon la revendication 1 quand le programme est exécuté sur un ordinateur.

**10.** Support de mémorisation lisible par ordinateur comprenant le produit-programme informatique selon la revendication 9.

**11.** Système de traitement de données programmé pour mettre en œuvre le procédé selon la revendication 1.

Fig. 1 (Prior Art)

EP 3 493 578 B1

Fig. 2 (Prior Art)

EP 3 493 578 B1

EP 3 493 578 B1

```
  ┌─────────────────┐      ┌─────────────────┐      ┌─────────────────┐
  │ 301             │      │ 302             │      │ 303             │
  │ DEVICE AND      │      │ TARGET CAPACITY │      │ OPTIMAL CAPACITY│
  │ CHANNEL         │─────▶│ COLLECTOR       │─────▶│ DEPLOYMENTS     │
  │ INFO COLLECTOR  │      │                 │      │ CALCULATOR      │
  └─────────────────┘      └─────────────────┘      └─────────────────┘

  ┌─────────────────┐      ┌─────────────────┐      ┌─────────────────┐
  │ 304             │      │ 305             │      │ 306             │
  │ LOCATION INFO   │      │ LOCALIZATION    │      │ OPTIMAL         │
  │ COLLECTOR       │─────▶│ OPTIMIZATION    │─────▶│ LOCALIZATION    │
  │                 │      │ CALCULATOR      │      │ DEPLOYMENTS     │
  └─────────────────┘      └─────────────────┘      │ CALCULATOR      │
                                                    └─────────────────┘

  ┌────────┐      ┌─────────────────┐      ┌─────────────────┐
  │ 309    │      │ 308             │      │ 307             │
  │ TIMER  │◀─────│ OPTIMAL         │◀─────│ CAPACITY +      │
  │        │      │ DEPLOYMENT      │      │ LOCALIZATION    │
  │        │      │ RECOMMENDER     │      │ OPTIMALITY      │
  └────────┘      └─────────────────┘      │ EVALUATOR       │
                                           └─────────────────┘
```

Fig. 3

Fig. 4

EP 3 493 578 B1

| B' | C' | | | |
|---|---|---|---|---|
| | W' = 20 | | W' = 80 | |
| | G' = 100 | G' = 400 | G' = 800 | G' = 400 |
| 0 | 6.5 | 7.2 | 29.3 | 32.5 |
| 1 | 13 | 14.4 | 58.5 | 65 |
| 2 | 19.5 | 21.7 | 87.8 | 97.5 |
| 3 | 26 | 28.9 | 117 | 130 |
| 4 | 39 | 43.3 | 175.5 | 195 |

Fig. 5

EP 3 493 578 B1

EP 3 493 578 B1

| j (user) | i (extender) | | maxD |
|---|---|---|---|
| | 1 | 2 (i*) | |
| 1 | 7.7 m | 1.3 m | 6.4 m |
| 2 | 8.8 m | 2.6 m | 6.2 m |
| 3 | 12.2 m | 3.1 m | 9.1 m |

600

Fig. 6

# EP 3 493 578 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. VANHATUPA et al.** Genetic Algorithm to Optimize Node Placement and Configuration for WLAN Planning. *IEEE ISWCS,* 2007
- **ZHONGMING ZHENG et al.** Minimum AP Placement for WLAN with Rate Adaptation Using Physical Interference Model. *IEEE Globecom,* 2010
- **Z. ZHANG et al.** A WLAN Planning Method for Indoor Positioning System. *International Conference on Information Networking (ICOIN),* 2016, 303-307
- **SHIH-HAU FANG et al.** A Novel Access Point Placement Approach for WLAN-Based Location Systems. *IEEE WCNC,* 2010
- **SUNGWOO TAK et al.** Modeling and Performance Study of AP Placement Framework for Indoor Location-Awareness and Network Performance. *the Proceedings of the 8th International Conference on Ubiquitous Information Management and Communication,* 2014
- **YOU ZHENG et al.** A New Approach to Design a WLAN-Based Positioning System. *Signal Processing and Communication Systems (ICSPCS) 4th International Conference,* 2010